# EUROPEAN PATENT APPLICATION

(11) **EP 2 940 777 A1**
(43) Date of publication of application: **04.11.2015**
(21) Application number: 13866803.3
(22) Date of filing: 16.12.2013
(51) Int. Cl.: H01M 10/052, H01M 4/36, H01M 4/40, H01M 4/60, H01M 4/62, H01M 10/0566

(54) **NONAQUEOUS ELECTROLYTE SECONDARY BATTERY, AND POSITIVE ELECTRODE USED THEREIN**

(30) Priority: 28.12.2012 JP 2012288154
(71) Applicant: Nitto Denko Corporation, Ibaraki-shi, Osaka 567-8680 (JP)
(72) Inventor: MIZUIKE Atsuko, Ibaraki-shi Osaka 567-8680 (JP); ABE Masao, Ibaraki-shi Osaka 567-8680 (JP)
(74) Representative: Hoffmann Eitle
(86) International application number: PCT/JP2013/083661
(87) International publication number: WO 2014/103779

(57) **Abstract**

A novel nonaqueous electrolyte secondary battery having a high weight energy density far exceeding the weight energy density of a conventional secondary battery is provided. A nonaqueous electrolyte secondary battery including an electrolyte layer 3, a positive electrode 2 and a negative electrode 4 with the electrolyte layer 3 interposed therebetween. The positive electrode 2 includes (a) an electrically conductive polymer, and (b) a phosphorus-containing polymer. The negative electrode 4 includes a base metal or a material capable of insertion/extraction of a base metal ion.

## Description

### TECHNICAL FIELD

The present invention relates to a nonaqueous electrolyte secondary battery, and a positive electrode for use in the same. More particularly, the present invention relates to a nonaqueous electrolyte secondary battery excellent in weight energy density, and a positive electrode for use in the same.

### BACKGROUND ART

With recent improvement and advancement of electronics technology for mobile PCs, mobile phones and personal digital assistants (PDAs), secondary batteries and the like, which can be repeatedly charged and discharged, are widely used as power storage devices for these electronic apparatuses.

Of the aforementioned secondary batteries, a lithium secondary battery of what is called a rocking chair-type includes a positive electrode that is prepared by using a lithium-containing transition metal oxide, such as lithium manganese oxide or lithium cobalt oxide, as an electrode active material, and a negative electrode that is prepared by using a carbon material capable of lithium ion insertion/extraction, to thereby be substantially free from change in lithium ion concentration of an electrolyte solution at the time of charge/discharge. The rocking chair-type lithium secondary battery is reduced in size because of its ability to reduce the amount of electrolyte solution, as compared with a secondary battery of what is called a reserve type, and is widely used as a power storage device for the aforesaid electronic apparatuses because of its higher energy density.

However, the lithium secondary battery, which is a power storage device that generates electric energy through an electrochemical reaction, has a significant problem in having a lower power density because of its lower electrochemical reaction rate.

There is also known a nonaqueous electrolyte secondary battery in which an electrically conductive polymer, such as a polyaniline, containing a dopant is used as a positive electrode active material (see PTL1).

In general, however, the secondary battery employing the electrically conductive polymer as the positive electrode active material is of an anion migration type in which the electrically conductive polymer is doped with an anion in a charge period and dedoped with the anion in a discharge period. Where a carbon material or the like capable of lithium ion insertion/extraction is used as a negative electrode active material, it is therefore impossible to provide a rocking chair-type secondary battery of a cation migration type in which the cation migrates between the electrodes in the charge/discharge. That is, the rocking chair-type secondary battery is advantageous in that only a smaller amount of the electrolyte solution is required, but the secondary battery employing the electrically conductive polymer as the positive electrode active material cannot enjoy this advantage. Therefore, it is impossible to contribute to the size reduction of the power storage device.

To cope with this problem, a secondary battery of a cation migration type that is substantially free from change in the ion concentration of the electrolyte solution without the need for a greater amount of the electrolyte solution, and that aims at improving the capacity density per unit volume or per unit weight is proposed. This secondary battery includes a positive electrode prepared by using an electrically conductive polymer containing a polymer anion, such as polyvinyl sulfonate, as a dopant, and a negative electrode of metal lithium (see PTL2).

### RELATED ART DOCUMENT

### PATENT DOCUMENTS

PTL 1: JP-A-HEI03(1991)-129679
PTL 2: JP-A-HEI01(1989)-132052

### SUMMARY OF INVENTION

However, the secondary batteries and the like that employ the aforementioned proposed electrically conductive polymer are still insufficient in performance and lower in weight energy density than the lithium secondary batteries that employ the lithium-containing transition metal oxide, such as lithium manganese oxide or lithium cobalt oxide for the electrodes.

In view of the foregoing, the present invention has been made to solve the aforementioned problems with the conventional secondary batteries. It is an object of the present invention to provide a novel nonaqueous electrolyte secondary battery having a high weight energy density far exceeding the weight energy density of a conventional electric double layer capacitor, and a positive electrode for use in the same.

A first aspect of the present invention is a nonaqueous electrolyte secondary battery comprising: an electrolyte layer; a positive electrode and a negative electrode with the electrolyte layer interposed therebetween, the positive electrode including (a) an electrically conductive polymer, and (b) a phosphorus-containing polymer, the negative electrode including a base metal or a material capable of insertion/extraction of a base metal ion.

Also, a second aspect of the present invention is a positive electrode for a nonaqueous electrolyte secondary battery, comprising a composite having a positive electrode active material layer including (a) an electrically conductive polymer and (b) a phosphorus-containing polymer on a current collector.

The present inventors have diligently made studies to obtain a nonaqueous electrolyte secondary battery excellent in weight energy density. As a result, the present inventors have found that the use of (b) the phosphorus-containing polymer together with (a) the electrically conductive polymer for the positive electrode accomplishes an intended object to provide a secondary battery having a high weight energy density far exceeding the weight energy density of a conventional electric double layer capacitor.

In this manner, the present invention is a nonaqueous electrolyte secondary battery comprising an electrolyte layer, a positive electrode and a negative electrode with the electrolyte layer interposed therebetween. The positive electrode includes (a) an electrically conductive polymer, and (b) a phosphorus-containing polymer. The negative electrode includes a base metal or a material capable of insertion/extraction of a base metal ion. This provides a high weight energy density far exceeding the weight energy density of a conventional electric double layer capacitor. In other words, the nonaqueous electrolyte secondary battery according to the present invention is a secondary battery having capacitor-type characteristics.

When the polymer for (a) the electrically conductive polymer is at least one selected from the group consisting of a polyaniline, a polyaniline derivative, a polypyrrole and a polypyrrole derivative, a secondary battery having a much higher weight energy density is provided.

When (b) the phosphorus-containing polymer is at least one selected from the group consisting of a polyphosphonic acid, a metal salt of a polyphosphonic acid, a polyphosphoric acid and a metal salt of a polyphosphoric acid, a secondary battery having a much higher weight energy density is provided.

### BRIEF DESCRIPTION OF DRAWINGS

[FIG. 1] FIG. 1 is a sectional view schematically showing a structure of a nonaqueous electrolyte secondary battery.
[FIG. 2] FIG. 2 is schematic sectional view showing the behavior of lithium ions and anions in a nonaqueous electrolyte secondary battery produced by employing a positive electrode material including a polyaniline and a polyphosphonic acid and by employing lithium for a negative electrode.

### DESCRIPTION OF EMBODIMENTS

An embodiment of the present invention will hereinafter be described in detail by way of example but not by way of limitation.

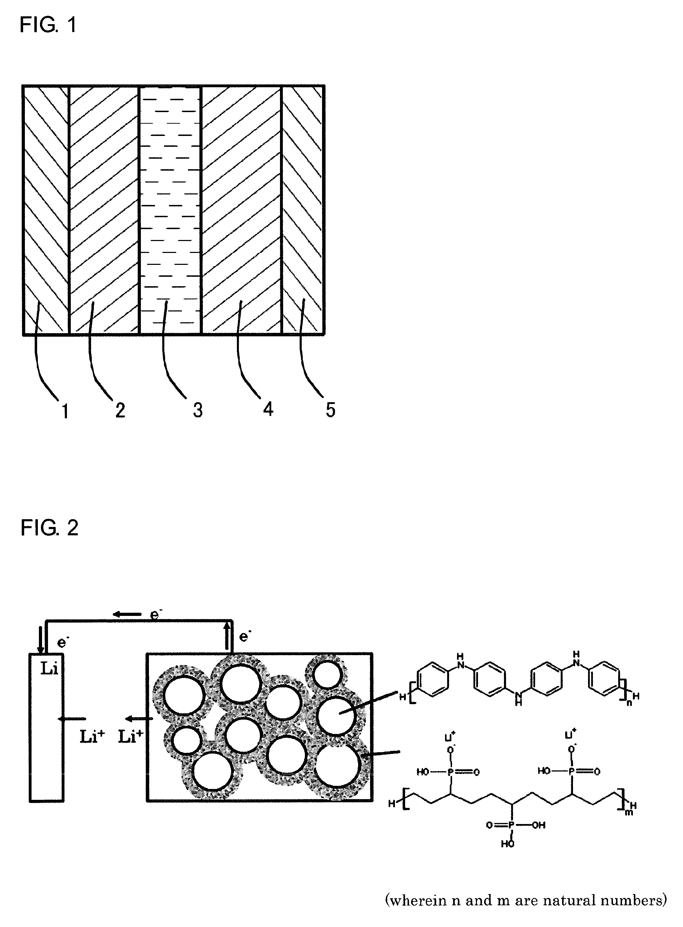

As shown in FIG. 1, a nonaqueous electrolyte secondary battery according to the present invention is a nonaqueous electrolyte secondary battery having a nonaqueous electrolyte layer 3, a positive electrode 2 and a negative electrode 4 with the electrolyte layer 3 interposed therebetween. The positive electrode 2 is a composite including (a) an electrically conductive polymer and (b) a phosphorus-containing polymer. The negative electrode 4 is made of a base metal or a material capable of insertion/extraction of a base metal ion.

### <Positive Electrode>

A nonaqueous electrolyte secondary battery positive electrode which forms the positive electrode of the nonaqueous electrolyte secondary battery according to the present invention is a composite having a positive electrode active material layer including (a) the electrically conductive polymer and (b) the phosphorus-containing polymer on a current collector. This is a characteristic of the present invention. The materials employed therefor and the like will be described step by step.

### <(a) Electrically Conductive Polymer>

In the present invention, (a) the electrically conductive polymer is defined as any polymer (hereinafter referred to also as "electrode active materials" in some cases) that has electrical conductivity varied by insertion or extraction of ionic species into or out of the polymer in order to compensate for change in electric charge to be generated or removed by an oxidation reaction or a reduction reaction occurring in a main chain of the polymer. A state of the polymer in which ionic species are inserted into the polymer to provide higher electrical conductivity refers to a doped state, and a state of the polymer in which ionic species are extracted out of the polymer to provide lower electrical conductivity refers to a dedoped state. Even if the electrically conductive polymer loses its electrical conductivity due to the oxidation reaction or the reduction reaction to be thereby electrically insulative (in the dedoped state), the polymer can reversibly have electrical conductivity again due to the oxidation/reduction reaction. Therefore, the electrically insulative polymer in the dedoped state is also classified into the category of the electrically conductive polymer in the present invention.

Thus, a preferred example of (a) the electrically conductive polymer in the present invention is a polymer containing a dopant of at least one protonic acid anion selected from the group consisting of inorganic acid anions, aliphatic sulfonate anions, aromatic sulfonate anions, polymeric sulfonate anions and polyvinyl sulfate anions. Another preferred example of the electrically conductive polymer in the present invention is a polymer obtained in the dedoped state by dedoping the electrically conductive polymer described above.

Examples of a polymer for (a) the electrically conductive polymer in the present invention include polypyrrole, polyaniline, polythiophene, polyfuran, polyselenophene, polyisothianaphthene, polyphenylene sulfide, polyphenylene oxide, polyazulene, poly(3,4-ethylenedioxythiophene), polyacene, and various derivatives thereof. In particular, at least one selected from the group consisting of polyaniline, polyaniline derivatives, polypyrrole and polypyrrole derivatives is preferably used because the obtained electrically conductive polymer has a higher capacity per unit weight. At least one selected from the group consisting of polyaniline and polyaniline derivatives are further preferably used.

In the present invention, the aforementioned polyaniline is a polymer prepared by electrochemical polymerization or chemical oxidative polymerization of aniline, and the polyaniline derivatives are polymers prepared by electrochemical polymerization or chemical oxidative polymerization of aniline derivatives. Examples of the aniline derivatives include aniline derivatives prepared by substituting aniline at positions other than the 4-position thereof with at least one substituent selected from the group consisting of alkyl groups, alkenyl groups, alkoxy groups, aryl groups, aryloxy groups, alkylaryl groups, arylalkyl groups and alkoxyalkyl groups. Specific examples of the aniline derivatives include o-substituted anilines such as o-methylaniline, o-ethylaniline, o-phenylaniline, o-methoxyaniline and o-ethoxyaniline, and m-substituted anilines such as m-methylaniline, m-ethylaniline, m-methoxyaniline, m-ethoxyaniline and m-phenylaniline.

Though having a substituent at the 4-position, p-phenylaminoaniline is exceptionally advantageously used according to the present invention as the aniline derivative because polyaniline can be provided by the chemical oxidative polymerization of p-phenylaminoaniline.

In the present invention, the polypyrrole is a polymer prepared by electrochemical polymerization or chemical oxidative polymerization of pyrrole, and the polypyrrole derivatives are polymers prepared by electrochemical polymerization or chemical oxidative polymerization of pyrrole derivatives. Examples of the pyrrole derivatives include pyrrole derivatives prepared by substituting pyrrole at positions other than the 2-position and 5-position thereof with at least one substituent selected from the group consisting of alkyl groups, alkenyl groups, alkoxy groups, aryl groups, aryloxy groups, alkylaryl groups and arylalkyl groups. Specific examples of the pyrrole derivatives include 3-methylpyrrole, 3-ethyl pyrrole, 3-ethenyl pyrrole, 3-methoxypyrrole, 3-ethoxypyrrole, 3-phenylpyrrole, 3-phenoxypyrrole, 3-p-toluyl pyrrole, 3-benzylpyrrole, 3-methoxymethylpyrrole, 3-p-fluorophenylpyrrole, 3,4-dimethylpyrrole, 3,4-diethylpyrrole, 3,4-diethenylpyrrole, 3,4-dimethoxypyrrole, 3,4-diphenoxypyrrole, 3,4-di(p-toluyl)pyrrole, 3,4-dibenzylpyrrole, 3,4-dimethoxymethylpyrrole, and 3,4-p-fluorophenylpyrrole.

In the present invention, "aniline or an aniline derivative" is referred to simply as "aniline", and "pyrrole or a pyrrole derivative" is referred to simply as "pyrrole", unless otherwise specified. Even if a polymer for the electrically conductive polymer is prepared from an aniline derivative or a pyrrole derivative, the resulting polymer is referred to as an "electrically conductive polyaniline" or an "electrically conductive polypyrrole".

As well known, (a) the electrically conductive polymer in the present invention can be prepared by electrochemical polymerization of a monomer, such as aniline and pyrrole, in a proper solvent in the presence of a protonic acid or by chemical oxidative polymerization of the monomer with the use of an oxidizing agent. Preferably, (a) the electrically conductive polymer is prepared by the chemical oxidative polymerization of a monomer, such as aniline and pyrrole, in a proper solvent in the presence of a protonic acid with the use of an oxidizing agent. In general, water is used as the solvent, but other usable examples of the solvent include solvent mixtures of water soluble organic solvents and water, and solvent mixtures of water and nonpolar organic solvents. In this case, a surface active agent or the like is sometimes used in combination with the solvent.

As an example, an instance where water is used as the solvent for the chemical oxidative polymerization of aniline will be described in further detail. Aniline is polymerized in water in the presence of a protonic acid with the use of a water-soluble chemical oxidizing agent through the chemical oxidative polymerization.

Preferably, examples of the oxidizing agent include ammonium peroxodisulfate, manganese dioxide, hydrogen peroxide, potassium bichromate, potassium permanganate, sodium chlorate, cerium ammonium nitrate, sodium iodate and iron chloride.

The amount of the oxidizing agent to be used for the chemical oxidative polymerization of aniline is related to the yield of the electrically conductive polyaniline. For stoichiometric reaction of aniline, the oxidizing agent is preferably used in an amount (2.5/n) times the molar amount of aniline to be used, wherein n is the number of electrons required for the reduction of one molecule of the oxidizing agent. In the case of ammonium peroxodisulfate, for example, n is 2 as can be understood from the following reaction formula:

(NH₄)₂S₂O₈ + 2e → 2NH⁴⁺ + 2SO₄²⁻

However, the amount of the oxidizing agent to be used may be slightly smaller than the amount (2.5/n) times the molar amount of aniline to be used, i.e., 30 to 80 % of the amount (2.5/n) times the molar amount of aniline to be used, for suppression of peroxidization of the polyaniline.

In the production of the electrically conductive polyaniline, the protonic acid serves to dope the produced polyaniline for imparting the polyaniline with electrical conductivity and for dissolving aniline in the form of salt in water. The protonic acid also serves to maintain the polymerization reaction system at a strong acidity level, preferably, with a pH of not higher than 1. Therefore, the amount of the protonic acid is not particularly limited in the production of the electrically conductive polyaniline, as long as the above purposes can be achieved. In general, the amount of the protonic acid is 1.1 to 5 times the molar amount of aniline. If the amount of the protonic acid is excessively great, the costs of a waste liquid treatment required after the chemical oxidative polymerization of aniline is needlessly increased. Therefore, the amount of the protonic acid is preferably 1.1 to 2 times the molar amount of aniline. Thus, a protonic acid having a strong acidity is preferably used, and a protonic acid having an acid dissociation constant pKa of less than 3.0 is more preferably used.

Preferred examples of the protonic acid having an acid dissociation constant pKa of less than 3.0 include inorganic acids such as sulfuric acid, hydrochloric acid, nitric acid, perchloric acid, tetrafluoroboric acid, hexafluorophosphoric acid, hydrofluoric acid and hydroiodic acid, aromatic sulfonic acids such as benzenesulfonic acid and p-toluenesulfonic acid, and aliphatic sulfonic acids (or alkanesulfonic acids) such as methanesulfonic acid and ethanesulfonic acid. Further, a polymer having a sulfonic acid group in its molecule, i.e. , a polymer sulfonic acid, is also usable. Examples of the polymer sulfonic acid include polystyrene sulfonic acid, polyvinyl sulfonic acid, polyallyl sulfonic acid, poly(acrylamide-t-butylsulfonic acid), phenol sulfonic acid novolak resin, and perfluorosulfonic acid such as NAFION. In the present invention, polyvinyl sulfuric acid is also usable as the protonic acid.

Other examples of the protonic acid to be used for the production of the electrically conductive polyaniline include some kinds of phenols, such as picric acid, some kinds of aromatic carboxylic acids, such as m-nitrobenzoic acid, and some kinds of aliphatic carboxylic acids, such as dichloroacetic acid and malonic acid, which each have an acid dissociation constant pKa of less than 3.0.

Of the various protonic acids described above, tetrafluoroboric acid and hexafluorophosphoric acid are preferably used, for example, because they are protonic acids each containing the same anion species as an electrolyte salt (lithium salt) used for an electrolyte solution in a lithium secondary battery which is an example of the nonaqueous electrolyte secondary battery.

According to the present invention, (a) the electrically conductive polymer is prepared by doping the aforementioned polymer with the protonic acid. That is, the aforementioned polymer has the aforementioned protonic acid as a dopant. The nonaqueous electrolyte secondary battery according to the present invention includes the positive electrode containing (a) the electrically conductive polymer and (b) the phosphorus-containing polymer. However, (b) the phosphorus-containing polymer used herein may be of a free acid type to be described later or of a metal salt type such as lithium salts and sodium salts. In the present invention, (b) the phosphorus-containing polymer preferably has an acid dissociation constant pKa of not less than 3.0. This is because a polyphosphonic acid having an acid dissociation constant pKa of not less than 3.0 is less prone to dope a polymer.

In a charge period or a discharge period, (a) the electrically conductive polymer may be either in a doped state (state of charge) or in a reduced-dedoped state (state of discharge).

In general, (a) the electrically conductive polymer is in a doped state (ion-inserted state) as it is. On the other hand, when (a) the electrically conductive polymer is not in the doped state (state of charge), the execution of a doping process brings (a) the electrically conductive polymer into the doped state. Specific examples of a method for the doping process include a method of mixing a dopant containing doping atoms into a starting material (for example, aniline for polyaniline), and a method of causing a product (for example, polyaniline) to react with a dopant.

As stated earlier, the ion insertion/extraction of (a) the electrically conductive polymer is also referred to as what is called doping/dedoping, and the doping amount per unit molecular structure is referred to as a doping ratio. A material having a higher doping ratio can provide a higher capacity battery.

The doping ratio as used in the present invention means the doping/dedoping amount per unit molecular structure of (a) the electrically conductive polymer which is an electrode active material, as mentioned above.

The nonaqueous electrolyte secondary battery according to the present invention is generally formed using an electrode (positive electrode) made of a material containing (a) the electrically conductive polymer and (b) the phosphorus-containing polymer to be described later. Preferably, this electrode is in the form of a porous sheet and the like by using at least (a) the electrically conductive polymer and (b) the phosphorus-containing polymer.

### <(b) Phosphorus-Containing Polymer>

The phosphorus-containing polymer (b) in the present invention means a polymer containing phosphorus. Examples of the phosphorus-containing polymer (b) include polyphosphonic acids, metal salts of polyphosphonic acids, polyphosphoric acids, metal salts of polyphosphoric acids, polystyrene phosphonic acids and polyethyleneimine phosphonic acids. These are used either alone or in combination. Of these, at least one selected from the group consisting of polyphosphonic acids, metal salts of polyphosphonic acids, polyphosphoric acids and metal salts of polyphosphoric acids is more preferably used because it improves the capacity density of the nonaqueous electrolyte secondary battery.

The polyphosphonic acids refer to polymers each having a phosphonyl group in its molecule represented by General Formula (1) to be described below. Preferred examples of the polyphosphonic acids include poly(vinyl phosphonic acid) s, aromatic phosphonic acid polymers and copolymers including at least two types of repeat units of these polymers. These are used either alone or in combination. The aforementioned copolymers in the present invention shall include graft copolymers. 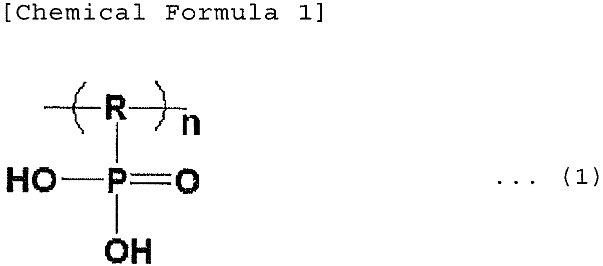 wherein R is a trivalent organic group; an atom bonded to P is a carbon atom; and n is a natural number.

Examples of R in General Formula (1) described above include three examples represented below in (2) to (4). 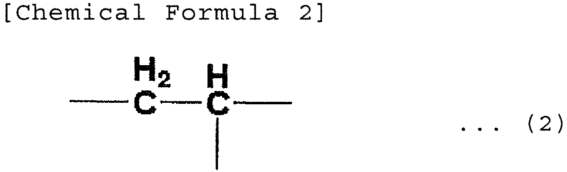 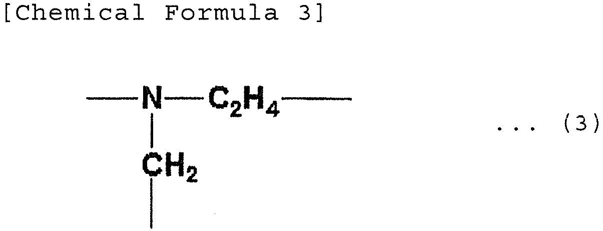 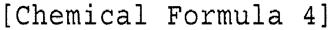 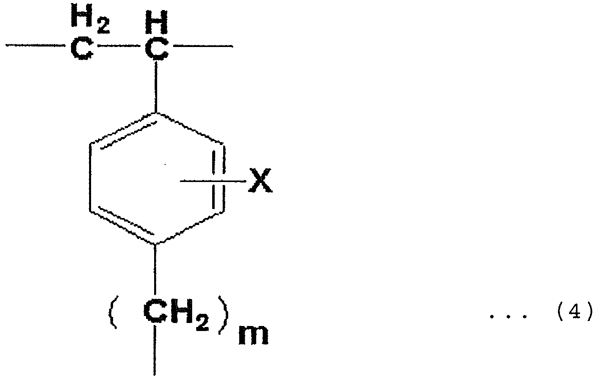 wherein X is a univalent organic group, and is a substituent selected from the group consisting of alkyl groups, such as methyl groups and ethyl groups, alkoxy groups, such as methoxy groups and ethoxy groups, halogen groups, such as chlorine and bromine, amino groups, nitro groups, sulfonic acid groups, carboxyl groups, hydroxyl groups and cyano groups; and m is a natural number.

In the present invention, the metal salts of polyphosphonic acids are at least either alkali metal salts or alkaline earth metal salts of polyphosphonic acids. Preferred examples of the alkali metal salts include lithium salts and sodium salts. Preferred examples of the alkaline earth metal salts include magnesium salts and calcium salts.

The polyphosphoric acids refer to polymers each having a phosphate group in its molecule represented by General Formula (5) to be described below. 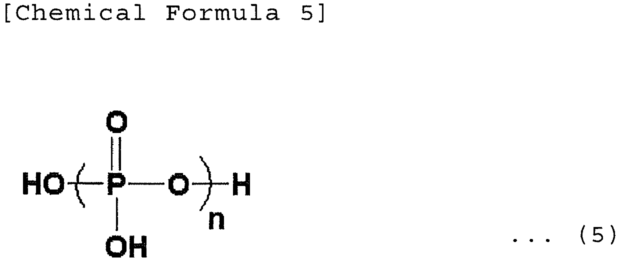 wherein n is a natural number.

The metal salts of polyphosphoric acids are at least either alkali metal salts or alkaline earth metal salts of polyphosphoric acids. Preferred examples of the alkali metal salts include lithium salts and sodium salts. Preferred examples of the alkaline earth metal salts include magnesium salts and calcium salts.

The phosphorus-containing polymers are broadly classified into two categories: organic phosphorus-containing polymers and inorganic phosphorus-containing polymers. Examples of the organic phosphorus-containing polymers include polyphosphonic acids such as poly(vinyl phosphonic acid) s and aromatic phosphonic acid polymers, and metal salts thereof. Examples of the inorganic phosphorus-containing polymers include polyphosphoric acids and metal salts thereof.

When (b) the phosphorus-containing polymer is used together with (a) the electrically conductive polymer in the nonaqueous electrolyte secondary battery according to the present invention, (b) the phosphorus-containing polymer functions as a binder and also as a dopant to provide a rocking chair-type mechanism. This seems to be involved in improvements in the characteristic properties of the nonaqueous electrolyte secondary battery according to the present invention.

While no limitations are imposed on (b) the phosphorus-containing polymer in the nonaqueous electrolyte secondary battery according to the present invention, (b) the phosphorus-containing polymer functions as a binder in the production of the positive electrode, and, on the other hand, seems to be involved in improvements in the characteristic properties of the nonaqueous electrolyte secondary battery according to the present invention, which will be described later.

In the nonaqueous electrolyte secondary battery positive electrode in the present invention, (b) the phosphorus-containing polymer is generally used in an amount of 1 to 100 parts by weight, preferably 2 to 70 parts by weight, most preferably 5 to 40 parts by weight, based on 100 parts by weight of (a) the electrically conductive polymer. If the amount of (b) the phosphorus-containing polymer is excessively small with respect to (a) the electrically conductive polymer, it will be difficult to provide a nonaqueous electrolyte secondary battery having a higher weight power density. If the amount of (b) the phosphorus-containing polymer is excessively great with respect to (a) the electrically conductive polymer, on the other hand, it will be difficult to provide a nonaqueous electrolyte secondary battery having a higher weight energy density.

Further, a binder other than the aforementioned (b) the phosphorus-containing polymer, a conductive agent and the like may be appropriately mixed as positive electrode forming materials, when required, together with (a) the electrically conductive polymer and (b) the phosphorus-containing polymer.

The aforementioned conductive agent is only required to be an electrically conductive material free from change in its properties depending on a potential applied during the discharge of the nonaqueous electrolyte secondary battery. Examples of the conductive agent include electrically conductive carbon materials and metal materials. In particular, electrically conductive carbon blacks, such as acetylene black and Ketjen black, and fibrous carbon materials, such as carbon fibers and carbon nanotubes, are preferably used. Electrically conductive carbon blacks are especially preferable.

The aforementioned conductive agent is preferably 1 to 30 parts by weight, more preferably 4 to 20 parts by weight, especially preferably 8 to 18 parts by weight, based on 100 parts by weight of (a) the electrically conductive polymer. If the amount of the conductive agent to be mixed is in this range, the active material is prepared without anomalies in its shape and characteristics to effectively improve rate characteristics.

An example of the binder other than the aforementioned (b) the phosphorus-containing polymer includes vinylidene fluoride.

The nonaqueous electrolyte secondary battery positive electrode according to the present invention is in the form of a composite sheet having a layer including a solid positive electrode active material containing (a) the electrically conductive polymer and (b) the phosphorus-containing polymer, and the conductive agent and the like appropriately mixed, when required, on the current collector. The layer including the positive electrode active material and the conductive agent is generally a solid porous layer.

The nonaqueous electrolyte secondary battery positive electrode according to the present invention is produced, for example, in the following manner. First, (b) the phosphorus-containing polymer is dissolved in water, so that an aqueous solution is prepared. Then (a) the electrically conductive polymer and, as required, the conductive agent, such as an electrically conductive carbon black, are added to the aqueous solution, and sufficiently dispersed, so that a paste is prepared. The paste is applied onto the current collector, and water is evaporated. This provides a sheet electrode, i.e. a positive electrode sheet, in the form of a composite of a homogeneous mixture of (a) the electrically conductive polymer and (b) the phosphorus-containing polymer (and, as required, the conductive agent) on the current collector.

### <Positive Electrode>

Of the electrodes for the nonaqueous electrolyte secondary battery of the present invention, the positive electrode is made of a composite including (a) the electrically conductive polymer and (b) the phosphorus-containing polymer, and is preferably in the form of a porous sheet. The thickness of the electrode is preferably 1 to 1000 µm, and more preferably 10 to 700 µm.

The thickness of the positive electrode is obtained by measuring by means of a standard type dial gage (available from Ozaki Mfg. Co., Ltd.) which is a flat plate including a distal end portion having a diameter of 5 mm, and then averaging the values measured at ten points on a surface of the electrode.

The positive electrode for the nonaqueous electrolyte secondary battery of the present invention is produced, for example, in the following manner. First, (b) the phosphorus-containing polymer is dissolved in water, so that an aqueous solution is prepared. Then, (a) the electrically conductive polymer and, as required, the conductive agent and a binder other than the aforementioned (b) the phosphorus-containing polymer are appropriately added to the aqueous solution, and sufficiently dispersed, so that a paste is prepared. The paste is applied onto the current collector, and water is evaporated. This provides a sheet electrode (electrode) in the form of a composite (porous sheet) having a mixture layer containing (a) the electrically conductive polymer, (b) the phosphorus-containing polymer and, as required, the conductive agent and the binder other than the aforementioned (b) the phosphorus-containing polymer on the current collector.

In the positive electrode formed in the aforementioned manner, (b) the phosphorus-containing polymer is present as a mixture layer with (a) the electrically conductive polymer, and is thus fixed in the electrode. Then, (b) the phosphorus-containing polymer fixedly disposed near (a) the electrically conductive polymer in this manner is used also for charge compensation during the oxidation/reduction of (a) the electrically conductive polymer.

Thus, the nonaqueous electrolyte secondary battery according to the present invention has a rocking chair-type ion migration mechanism, as mentioned earlier, to require small quantities of anions in the electrolyte solution, which serve as a dopant. This results in a nonaqueous electrolyte secondary battery capable of giving rise to good characteristics even when the amount of usage of the electrolyte solution is small.

A porosity (%) of the electrode is calculated by {(apparent volume of electrode - absolute volume of electrode)/apparent volume of electrode} x 100. The porosity is preferably 30% to 95%, and more preferably 50% to 90%.

The apparent volume of the electrode as used in the present invention refers to "electrode area x electrode thickness of electrode", and specifically is the sum total of the volume of the substance of the electrode, the volume of voids in the electrode and the volume of the space of uneven portions on the surface of the electrode.

The absolute volume of the electrode as used in the present invention refers to the "volume of electrode constituent materials," except the current collector of aluminum foil and the like. Specifically, the absolute volume of the electrode is determined by calculating the mean density of all electrode constituent materials with the use of the constituent weight proportion of a positive electrode constituent material and the value of the true density of each constituent material and then dividing the sum total of the weights of the electrode constituent materials by the mean density.

Examples of the true density (absolute specific gravity) of each of the aforementioned constituent materials are as follows. The true density of a polyaniline as an example of (a) the electrically conductive polymer as used herein is 1.2 (including a dopant), and the true density of a poly(vinyl phosphonic acid) as an example of (b) the phosphorus-containing polymer as used herein is 1.2.

### <Electrolyte Layer>

The electrolyte layer for use in the nonaqueous electrolyte secondary battery according to the present invention is formed from an electrolyte. For example, a sheet including a separator impregnated with an electrolyte solution or a sheet made of a solid electrolyte is preferably used. The sheet made of the solid electrolyte per se functions as a separator.

The aforementioned electrolyte includes a solute and, as required, a solvent and additives. Preferred examples of the solute include compounds prepared by combining a metal ion such as a lithium ion with a proper counter ion, a sulfonate ion, a perchlorate ion, a tetrafluoroborate ion, a hexafluorophosphate ion, a hexafluoroarsenate ion, a bis(trifluoromethanesulfonyl)imide ion, a bis(pentafluoroethanesulfonyl)imide ion or a halide ion. Accordingly, specific examples of the electrolyte include LiCF₃SO₃, LiClO₄, LiBF₄, LiPF₆, LiAsF₆, LiN(SO₂CF₃)₂, LiN(SO₂C₂F₅)₂ and LiCl.

Examples of the aforementioned solvent used as required include nonaqueous solvents, i.e., organic solvents, such as carbonates, nitriles, amides and ethers, at least one of which is used. Specific examples of the organic solvents include ethylene carbonate, propylene carbonate, butylene carbonates, dimethyl carbonate, diethyl carbonate, ethyl methyl carbonate, acetonitrile, propionitrile, N,N'-dimethylacetamide, N-methyl-2-pyrrolidone, dimethoxyethane, diethoxyethane and γ-butyrolactone, which may be used either alone or in combination. A solution prepared by dissolving the aforementioned solute in the aforementioned solvent may be referred to as an "electrolyte solution" in some cases.

In the present invention, a separator can be used in a variety of forms as described above. The separator may be an insulative porous sheet which is capable of preventing an electrical short circuit between the positive electrode and the negative electrode disposed in opposed relation with the separator interposed therebetween, which is electrochemically stable and which has a higher ionic permeability and a certain mechanical strength. Therefore, exemplary materials for the separator include paper, nonwoven fabric, porous sheets having pores and made of a resin such as polypropylene, polyethylene or polyimide, which may be used either alone or in combination.

### <Negative Electrode>

The negative electrode for the nonaqueous electrolyte secondary battery according to the present invention is produced using a negative electrode active material which is a base metal or a carbon material capable of insertion/extraction of a base metal ion during oxidation/reduction. Examples of the base metal include alkali metals, such as metal lithium, metal sodium and metal potassium, and alkaline earth metals, such as metal magnesium and metal calcium. Examples of the base metal ion include ions of the aforementioned base metals. In the present invention, a preferred nonaqueous electrolyte secondary battery is a lithium secondary battery, and accordingly, a preferred example of the base metal is lithium and a preferred example of the base metal ion is a lithium ion. A carbon material is preferably used as the material capable of insertion/extraction of the base metal ion, but silicon, tin and the like may also be used. The term "use" as used in the present invention is to be interpreted as including meaning that the forming material is used in combination with a second forming material in addition to meaning that only the forming material is used. The proportion of the second forming material to be used is generally less than 50% by weight of the forming material.

The nonaqueous electrolyte secondary battery according to the present invention may be prepared using the current collector in addition to the positive electrode, the electrolyte layer, the negative electrode and the like described above. The current collector is not particularly limited if it is high in electrical conductivity and is stable. Metal foils and meshes, such as of nickel, aluminum, stainless steel and copper, are preferably used for the current collector. A material made of stainless steel is further preferably used for the current collector. Further, when the negative electrode is made of a metal, the negative electrode per se functions also as the current collector.

### <Nonaqueous Electrolyte Secondary Battery>

The nonaqueous electrolyte secondary battery is assembled using the aforementioned materials. The battery is preferably assembled in a glove box in an inert gas atmosphere such as an ultrapure argon gas atmosphere.

The nonaqueous electrolyte secondary battery according to the present invention generally has a weight capacity density of not less than 40 mAh/g per weight of (a) the electrically conductive polymer, and preferably has a weight capacity density of not less than 50 mAh/g.

Like the electric double layer capacitor, the nonaqueous electrolyte secondary battery according to the present invention has a higher weight power density and excellent cycle characteristics. In addition, the nonaqueous electrolyte secondary battery has a significantly higher weight energy density than the prior art electric double layer capacitor. Thus, the nonaqueous electrolyte secondary battery according to the present invention can be said to be a capacitor-type secondary battery. The reason why the nonaqueous electrolyte secondary battery according to the present invention has such capacitor-type characteristics is not yet clear, but it is inferred that (b) the phosphorus-containing polymer in combination with (a) the electrically conductive polymer is moderately dissociated in the electrolyte solution to carry a negative charge which in turn facilitates the migration of a base metal ion (for example, a lithium ion) between the electrodes, so that a rocking chair-type nonaqueous electrolyte secondary battery is provided.

The reason why the nonaqueous electrolyte secondary battery according to the present invention has such a high weight capacity density is as follows. In the positive electrode formed in the aforementioned manner, (b) the phosphorus-containing polymer is disposed as a mixture layer with (a) the electrically conductive polymer, and is thus fixed in the positive electrode, as mentioned above. Then, (b) the phosphorus-containing polymer fixedly disposed near (a) the electrically conductive polymer in this manner is used also for charge compensation during the oxidation/reduction of (a) the electrically conductive polymer. Also, the ionic environment of (b) the phosphorus-containing polymer facilitates the migration of ions inserted/extracted from (a) the electrically conductive polymer. For this and other reasons, the doping ratio of (a) the electrically conductive polymer is improved. Further, the provision of the rocking chair-type ion migration mechanism requires small quantities of anions in the electrolyte solution which serve as a dopant. As a result, it is inferred that the nonaqueous electrolyte secondary battery capable of giving rise to good characteristics (high weight capacity density and the like) even when the amount of usage of the electrolyte solution is small is provided.

A mechanism for doping an electrically conductive polyaniline with a polyphosphonic acid in the charge/discharge will be presented below by taking a lithium secondary battery prepared using the electrically conductive polyaniline as (a) the electrically conductive polymer and using a positive electrode including (b) the phosphorus-containing polymer as a preferred form of the nonaqueous electrolyte secondary battery according to the present invention. In a chemical formula presented below, a transition from the upper formula to the lower formula denotes "charge" in which (a) the electrically conductive polyaniline is doped with an anion, and a transition from the lower formula to the upper formula denotes "discharge" in which (a) the electrically conductive polyaniline is dedoped with the anion. Specifically, for the charge of the lithium secondary battery, a nitrogen atom having an unshared electron pair in the polyaniline is subjected to one-electron oxidation, as indicated by the transition from the upper formula to the lower formula in the chemical formula presented below. As a result, it is believed that the polyaniline is doped with an electrolyte anion in the electrolyte solution or a polyphosphonic acid anion present in the electrodes as a counterion of the produced cation radical, whereby a doped electrically conductive polyaniline is formed. For the discharge of the lithium secondary battery, on the other hand, the cation radical site in the electrically conductive polyaniline is reduced to return to an electrically neutral original polyaniline having an unshared electron pair, as indicated by the transition from the lower formula to the upper formula in the chemical formula presented below. At this time, when an anion Coulomb-interacting in the aforementioned cation radical site is an electrolyte anion, the electrolyte anion migrates from near the electrically conductive polymer to the electrolyte solution side.

However, when an anion Coulomb-interacting in the aforementioned cation radical site is a phosphonate anion of the polyphosphonic acid as indicated in the lower formula in the chemical formula presented below, the phosphoxy anion thereof which is a polymeric anion, unlike the electrolyte anion, cannot migrate to the electrolyte solution side but remains near the polyaniline. To make the phosphonate anion electrically neutral, a lithium cation in the electrolyte solution seems to migrate to near the electrically conductive polymer and serve as a counter cation of the aforementioned phosphonate anion to form a salt as indicated in the upper formula. 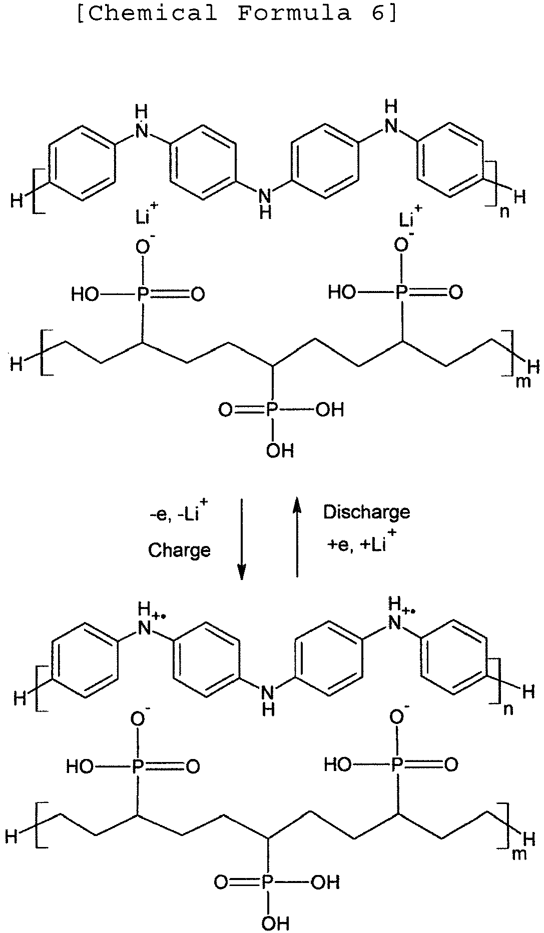 wherein n and m are natural numbers.

FIG. 2 schematically shows a lithium secondary battery including a positive electrode made of a material containing (a) the electrically conductive polyaniline and (b) the polyphosphonic acid and a negative electrode prepared using lithium as an example of such a nonaqueous electrolyte secondary battery, and also shows the behavior of lithium ions and anions in a charge period.

### EXAMPLES

Inventive examples will hereinafter be described in conjunction with a comparative example. However, the present invention is not limited to these examples.

The following components were prepared before the production of nonaqueous electrolyte secondary batteries (lithium secondary batteries) according to the inventive and comparative examples.

### [Preparation of (a) Electrically Conductive Polymer]

Electrically conductive polyaniline powder containing tetrafluoroboric acid as a dopant was prepared in the following manner as a polyaniline (a) which was an electrode active material.

### (Electrically Conductive Polyaniline Powder)

First, 84.0 g (0.402 mol) of a tetrafluoroboric acid aqueous solution (special grade reagent available from Wako Pure Chemical Industries, Ltd.) having a concentration of 42 wt% was added to 138 g of ion-exchanged water contained in a 300-mL volume glass beaker. Then, 10.0 g (0.107 mol) of aniline was added to the resulting solution, while the solution was stirred by a magnetic stirrer. Immediately after the addition of aniline to the tetrafluoroboric acid aqueous solution, aniline was dispersed in an oily droplet form in the tetrafluoroboric acid aqueous solution, and then dissolved in water in several minutes to provide a homogeneous transparent aniline aqueous solution. The aniline aqueous solution thus provided was cooled to -4°C or lower with the use of a refrigerant bath.

Then, 11.63 g (0.134 mol) of a powdery manganese dioxide oxidizing agent (Grade-1 reagent available from Wako Pure Chemical Industries, Ltd.) was added little by little to the aniline aqueous solution, while the mixture in the beaker was kept at a temperature of not higher than -1°C. Immediately after the oxidizing agent was thus added to the aniline aqueous solution, the color of the aniline aqueous solution turned dark green. Thereafter, the solution was continuously stirred, whereby generation of a dark green solid began.

After the oxidizing agent was added in 80 minutes in this manner, the resulting reaction mixture containing the reaction product thus generated was cooled, and further stirred for 100 minutes. Thereafter, the resulting solid was suction-filtered through No. 2 filter paper (available from ADVANTEC Corporation) with the use of a Buchner funnel and a suction bottle to provide powder. The powder was washed in an about 2 mol/L tetrafluoroboric acid aqueous solution with stirring by means of the magnetic stirrer, then washed in acetone several times with stirring, and suction-filtered. The resulting powder was dried in vacuum at a room temperature for 10 hours. Thus, 12.5 g of an electrically conductive polyaniline containing tetrafluoroboric acid as a dopant (referred to simply as an "electrically conductive polyaniline" hereinafter) was provided, which was bright green powder.

### [Preparation of (b) Phosphorus-Containing Polymer]

Prepared was 30% by weight of a poly(vinyl phosphonic acid) aqueous solution (available from Polysciences, Inc. and having a weight average molecular weight of 24,000).

### [Preparation of Negative Electrode Material]

Rolled lithium foil (available from Honjo Metal Co. , Ltd.) having a thickness of 0.05 mm was prepared.

### [Preparation of Electrolyte Solution]

An ethylene carbonate/dimethylene carbonate solution (a volume ratio of 50 to 50) containing lithium hexafluorophosphate at a concentration of 1 mol/dm³ (LGB-00022 available from Kishida Chemical Co., Ltd.) was prepared.

### [Preparation of Separator]

A separator nonwoven fabric (TF40-50 available from Nippon Kodoshi Corporation) was prepared.

### [Inventive Example 1]

### <Formation of Positive Electrode Using (a) and (b) >

### [Production of Positive Electrode Sheet Containing Electrically Conductive Polyaniline Powder]

After 3.95 g of the electrically conductive polyaniline powder was mixed with 0.5 g of electrically conductive carbon black powder (DENKA BLACK available from Denki Kagaku Kogyo Kabushiki Kaisha), the resulting mixture was added to 6.66 g of the poly (vinyl phosphonic acid) aqueous solution and 9 g of ion-exchanged water. After the resulting mixture was well kneaded with a spatula, a dispersion treatment was performed on the resulting mixture for 6 minutes by means of an ultrasonic homogenizer to provide a dispersion liquid having fluidity. Then, a mild dispersion treatment (stirring at a peripheral speed of 20 m/min for 30 seconds) using a high shearing force was performed on the dispersion liquid by means of a thin-film spin system high-speed mixer (FILMIX MODEL 40-40 available from Primix Corporation) to provide a fluid paste. The paste was stirred and defoamed by means of a planetary centrifugal mixer (THINKY MIXER MH-500 available from Thinky Corporation).

The defoamed paste was applied onto an etched aluminum foil for an electric double layer capacitor (30CB available from Hohsen Corporation) with the use of a desktop automatic coater (available from Tester Sangyo Co., Ltd.) while a coating rate was held at 10 mm/sec by a doctor blade applicator equipped with a micrometer. Next, the resulting coating was allowed to stand at room temperature (25°C) for 180 minutes, and then dried on a hot plate at a temperature of 100°C for 1 hour. Thus, a composite sheet was provided.

In this composite sheet, a positive electrode active material layer comprised of the electrically conductive polyaniline powder, the electrically conductive carbon black and the poly(vinyl phosphonic acid) had a thickness of 60 µm and a porosity of 55%.

### <Production of Lithium Secondary Battery>

First, the composite sheet was cut to dimensions of 35 mm × 27 mm, and part of the active material was removed so that the active material layer of the composite sheet had an area of 27 mm × 27 mm. After part of the composite sheet obtained by removing the part of the active material layer was determined as a location where a tab electrode was to be attached, an aluminum tab was welded to the composite sheet with the use of a precision resistance welding machine (NSW-15 available from Nag System Co. , Ltd.). Thus, a positive electrode sheet was provided.

For the negative electrode, on the other hand, a lithium metal foil roll (available from Honjo Metal Co. , Ltd. and having a width of 29 mm and a thickness of 0.05 mm) was used. In a glove box, the lithium metal foil roll was cut to dimensions of 29 mm × 29 mm. The cut part of the lithium metal foil roll was pressed against and into intimate contact with a nickel tab previously ultrasonically welded to a stainless steel mesh having dimensions of 35 mm × 29 mm. Thus, a negative electrode sheet was provided.

A separator nonwoven fabric for an electric double layer capacitor (EDLC) having a porosity of 55% (TF40-50 available from Nippon Kodoshi Corporation) was used as a separator. The separator used herein was cut to dimensions of 35 mm × 35 mm so as to be slightly greater than the positive electrode sheet and the negative electrode sheet.

The positive electrode sheet, the negative electrode sheet, the separator, aluminum laminated films and a tab film were put into a glove box immediately after being dried at 80°C for 2 hours by means of a vacuum dryer. Then, the negative electrode sheet, the separator and the positive electrode sheet were combined in the order named so that the negative electrode sheet and the positive electrode sheet were out of contact with each other, and were inserted between the aluminum laminated films. The resulting structure was heat-sealed. The electrode tab parts were heat-sealed, with the tab film inserted therebetween for the purpose of improving adhesion to the aluminum laminated films. An ethylene carbonate/dimethylene carbonate solution (a volume ratio of 50 to 50) containing lithium hexafluorophosphate at a concentration of 1 mol/dm³ (LGB-00022 available from Kishida Chemical Co., Ltd.) was used as the electrolyte solution. This solution was added so that the volume thereof was 1.3 times the volume of the positive electrode active material and the separator porosity. Thereafter, the resulting structure was heat-sealed hermetically, whereby a laminated cell lithium secondary battery was produced.

### <Characteristics of Lithium Secondary Battery>

The characteristics of the assembled lithium secondary battery were measured in a constant current and constant voltage charge/constant current discharge mode by means of a battery charge/discharge device (TOSCAT-3000 available from Toyo System Co., Ltd.). The charge termination voltage was set to 4.2 V, unless otherwise specified. After the voltage reached 4. 2 V through a constant current charge process, a constant voltage charge process was further performed until the current value became 20% of a current value for the constant current charge process. Thereafter, a constant current discharge process was performed to a discharge termination voltage of 2.0 V. This was repeated, and a charge/discharge cycle test was conducted at a charge/discharge current of 0.1 mA. Then, a weight capacity density (mAh/g) and a weight energy density (mWh/g) per positive electrode active material were measured with respect to a discharge capacity of the fifth charge/discharge cycle.

The aforementioned lithium secondary battery had a weight capacity density of 99.8 mAh/g and a weight energy density of 327 mWh/g.

### [Inventive Example 2]

### <Formation of Positive Electrode Using (a) and (b) >

### [Production of Positive Electrode Sheet Containing Electrically Conductive Polyaniline Powder]

After 2.67 g of the electrically conductive polyaniline powder was mixed with 0. 4 g of electrically conductive carbon black powder (DENKA BLACK available from Denki Kagaku Kogyo Kabushiki Kaisha), the resulting mixture was added to 1.2 g of a polyphosphoric acid (020-63075 available from Kishida Chemical Co., Ltd.) and 1.8 g of ion-exchanged water. After the resulting mixture was well kneaded with a spatula, a dispersion treatment was performed on the resulting mixture for 6 minutes by means of an ultrasonic homogenizer to provide a dispersion liquid paste having fluidity. The paste was further stirred and defoamed by means of a planetary centrifugal mixer (THINKY MIXER MH-500 available from Thinky Corporation).

The defoamed paste was applied onto an etched aluminum foil for an electric double layer capacitor (30CB available from Hohsen Corporation) with the use of a desktop automatic coater (available from Tester Sangyo Co., Ltd.) while a coating rate was held at 10 mm/sec by a doctor blade applicator equipped with a micrometer. Next, the resulting coating was allowed to stand at room temperature (25°C) for 180 minutes, and then dried on a hot plate at a temperature of 100°C for 1 hour. Thus, a composite sheet was provided.

In this composite sheet, a positive electrode active material layer comprised of the electrically conductive polyaniline powder, the electrically conductive carbon black and the polyphosphoric acid had a thickness of 90 µm and a porosity of 60%.

### <Production of Lithium Secondary Battery>

First, the composite sheet was cut to dimensions of 35 mm × 27 mm, and part of the active material was removed so that the active material layer of the composite sheet had an area of 27 mm × 27 mm. After part of the composite sheet obtained by removing the part of the active material layer was determined as a location where a tab electrode was to be attached, an aluminum tab was welded to the composite sheet with the use of a precision resistance welding machine (NSW-15 available from Nag System Co. , Ltd.). Thus, a positive electrode sheet was provided.

For the negative electrode, on the other hand, a lithium metal foil roll (available from Honjo Metal Co. , Ltd. and having a width of 29 mm and a thickness of 0.05 mm) was used. In a glove box, the lithium metal foil roll was cut to dimensions of 29 mm × 29 mm. The cut part of the lithium metal foil roll was pressed against and into intimate contact with a nickel tab previously ultrasonically welded to a stainless steel mesh having dimensions of 35 mm × 29 mm. Thus, a negative electrode sheet was provided.

A separator nonwoven fabric for an electric double layer capacitor (EDLC) having a porosity of 55% (TF40-50 available from Nippon Kodoshi Corporation) was used as a separator. The separator used herein was cut to dimensions of 35 mm x 35 mm so as to be slightly greater than the positive electrode sheet and the negative electrode sheet.

The positive electrode sheet, the negative electrode sheet, the separator, aluminum laminated films and a tab film were put into a glove box immediately after being dried at 80°C for 2 hours by means of a vacuum dryer. Then, the negative electrode sheet, the separator and the positive electrode sheet were combined in the order named so that the negative electrode sheet and the positive electrode sheet were out of contact with each other, and were inserted between the aluminum laminated films. The resulting structure was heat-sealed. The electrode tab parts were heat-sealed, with the tab film inserted therebetween for the purpose of improving adhesion to the aluminum laminated films. An ethylene carbonate/dimethylene carbonate solution (a volume ratio of 50 to 50) containing lithium tetrafluoroborate at a concentration of 1 mol/dm³ (LGB-96873 available from Kishida Chemical Co., Ltd.) was used as the electrolyte solution. Then, 300 µL of this solution was added so that the volume thereof was 1.3 times the volume of the positive electrode active material and the separator porosity. Thereafter, the resulting structure was heat-sealed hermetically, whereby a laminated cell lithium secondary battery was produced.

### <Characteristics of Lithium Secondary Battery>

The characteristics of the assembled lithium secondary battery were measured in a constant current and constant voltage charge/constant current discharge mode by means of a battery charge/discharge device (TOSCAT-3000 available from Toyo System Co., Ltd.). The charge termination voltage was set to 4.2 V, unless otherwise specified. After the voltage reached 4.2 V through a constant current charge process, a constant voltage charge process was further performed until the current value became 20% of a current value for the constant current charge process. Thereafter, a constant current discharge process was performed to a discharge termination voltage of 2.0 V. This was repeated, and a charge/discharge cycle test was conducted at a charge/discharge current of 0.15 mA. Then, a weight capacity density (mAh/g) and a weight energy density (mWh/g) per positive electrode active material were measured with respect to a discharge capacity of the fifth charge/discharge cycle.

The aforementioned lithium secondary battery had a weight capacity density of 120.2 mAh/g and a weight energy density of 404 mWh/g.

### [Comparative Example 1]

Styrene-butadiene rubber was used in place of the poly(vinyl phosphonic acid) in Inventive Example 1. Except for this difference, a positive electrode sheet was produced in substantially the same manner as in Inventive Example 1, and a lithium secondary battery was produced by using this positive electrode sheet in substantially the same manner as in Inventive Example 1. A charge/discharge cycle test was conducted at a charge/discharge current of 0.1 mA on the lithium secondary battery thus provided in the same manner as in Inventive Example 1. As a result, the lithium secondary battery had a weight capacity density of 44.8 mAh/g and a weight energy density of 148 mWh/g. From this, it has been determined that Comparative Example 1 is lower in weight capacity density and in weight energy density than Inventive Example 1.

The results (the weight capacity density and the weight energy density) of the charge/discharge cycle test conducted at the charge/discharge current of 0.1 mA are shown also below in Table 1.

**[Table 1]**

| | Weight capacity density (mAh/g) | Weight energy density (mWh/g) |
|---|---|---|
| Inventive Example 1 | 99.8 | 327 |
| Inventive Example 2 | 120.2 | 404 |
| Comparative Example 1 | 44.8 | 148 |

In this manner, it has been determined that the lithium secondary battery in Comparative Example 1 is lower in weight capacity density and in weight energy density than the lithium secondary batteries in Inventive Examples 1 and 2.

While specific forms of the embodiment of the present invention have been shown in the aforementioned inventive examples, the inventive examples are merely illustrative of the invention but not limitative of the invention. It is contemplated that various modifications apparent to those skilled in the art could be made within the scope of the invention.

The nonaqueous electrolyte secondary battery according to the present invention is advantageously used as a secondary battery, such as a lithium secondary battery. The nonaqueous electrolyte secondary battery according to the present invention can be used for the same applications as the prior art secondary batteries, for example, for mobile electronic apparatuses such as mobile PCs, mobile phones and personal data assistants (PDAs), and for driving power sources for hybrid electric cars, electric cars and fuel battery cars.

### REFERENCE SIGNS LIST

- 1: Current collector (for positive electrode)
- 2: Positive electrode
- 3: Electrolyte layer
- 4: Negative electrode
- 5: Current collector (for negative electrode)

## Claims

1. A nonaqueous electrolyte secondary battery comprising:
an electrolyte layer; and
a positive electrode and a negative electrode with the electrolyte layer interposed therebetween,
wherein the positive electrode includes (a) an electrically conductive polymer, and (b) a phosphorus-containing polymer, and
wherein the negative electrode includes a base metal or a material capable of insertion/extraction of a base metal ion.

2. The nonaqueous electrolyte secondary battery according to claim 1, wherein (a) the electrically conductive polymer is a polymer containing a dopant of at least one protonic acid anion selected from the group consisting of an inorganic acid anion, an aliphatic sulfonate anion, an aromatic sulfonate anion, a polymeric sulfonate anion and a polyvinyl sulfate anion.

3. The nonaqueous electrolyte secondary battery according to claim 1, wherein (a) the electrically conductive polymer is a polymer in a dedoped state.

4. The nonaqueous electrolyte secondary battery according to any one of claims 1 to 3, wherein the polymer for (a) the electrically conductive polymer is at least one selected from the group consisting of a polyaniline, a polyaniline derivative, a polypyrrole and a polypyrrole derivative.

5. The nonaqueous electrolyte secondary battery according to any one of claims 1 to 4, wherein (b) the phosphorus-containing polymer is at least one selected from the group consisting of a polyphosphonic acid, a metal salt of a polyphosphonic acid, a polyphosphoric acid and a metal salt of a polyphosphoric acid.

6. The nonaqueous electrolyte secondary battery according to claim 5, wherein the polyphosphonic acid is at least one selected from the group consisting of a poly(vinyl phosphonic acid), an aromatic phosphonic acid polymer and a copolymer including at least two types of repeat units of these polymers.

7. The nonaqueous electrolyte secondary battery according to claim 5, wherein the metal salt of the polyphosphonic acid is at least either an alkali metal salt of a polyphosphonic acid or an alkaline earth metal salt of a polyphosphonic acid.

8. The nonaqueous electrolyte secondary battery according to any one of claims 1 to 7, wherein the nonaqueous electrolyte secondary battery being a lithium secondary battery.

9. A positive electrode for a nonaqueous electrolyte secondary battery, comprising a composite having a positive electrode active material layer including (a) an electrically conductive polymer and (b) a phosphorus-containing polymer on a current collector.

10. The positive electrode for a nonaqueous electrolyte secondary battery according to claim 9, wherein (a) the electrically conductive polymer is a polymer containing a dopant of at least one protonic acid anion selected from the group consisting of an inorganic acid anion, an aliphatic sulfonate anion, an aromatic sulfonate anion, a polymeric sulfonate anion and a polyvinyl sulfate anion.

11. The positive electrode for a nonaqueous electrolyte secondary battery according to claim 9, wherein (a) the electrically conductive polymer is a polymer in a dedoped state.

12. The positive electrode for a nonaqueous electrolyte secondary battery according to any one of claims 9 to 11, wherein the polymer for (a) the electrically conductive polymer is at least one selected from the group consisting of a polyaniline, a polyaniline derivative, a polypyrrole and a polypyrrole derivative.

13. The positive electrode for a nonaqueous electrolyte secondary battery according to any one of claims 9 to 12, wherein (b) the phosphorus-containing polymer is at least one selected from the group consisting of a polyphosphonic acid, a metal salt of a polyphosphonic acid, a polyphosphoric acid and a metal salt of a polyphosphoric acid.

14. The positive electrode for a nonaqueous electrolyte secondary battery according to claim 13, wherein the polyphosphonic acid is at least one selected from the group consisting of a poly(vinyl phosphonic acid), an aromatic phosphonic acid polymer and a copolymer including at least two types of repeat units of these polymers.

15. The positive electrode for a nonaqueous electrolyte secondary battery according to claim 13, wherein the metal salt of the polyphosphonic acid is at least either an alkali metal salt of a polyphosphonic acid or an alkaline earth metal salt of a polyphosphonic acid.

16. The positive electrode for a nonaqueous electrolyte secondary battery according to any one of claims 9 to 15, the positive electrode being for a lithium secondary battery.
